(19) Europäisches Patentamt

European Patent Office

Office européen des brevets

(11) **EP 1 694 075 A1**

(12) **DEMANDE DE BREVET EUROPEEN**

(43) Date de publication:
**23.08.2006 Bulletin 2006/34**

(51) Int Cl.:
***H04N 7/26*** *(2006.01)*

(21) Numéro de dépôt: **05102465.1**

(22) Date de dépôt: **29.03.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **21.02.2005 FR 0550477**

(71) Demandeur: **Thomson Licensing**
**92100 Boulogne-Billancourt (FR)**

(72) Inventeurs:
• **VIERON, Jérôme**
**92648, BOULOGNE CEDEX (FR)**
• **BURDIN, Nicolas**
**92648, BOULOGNE CEDEX (FR)**
• **LOPEZ, Patrick**
**92648, BOULOGNE CEDEX (FR)**

(74) Mandataire: **Le Dantec, Claude**
**Thomson,**
**46, Quai Alphonse Le Gallo**
**92100 Boulogne-Billancourt (FR)**

(54) **Méthode d'héritage inter couches utilisée dans un dispositif de codage et de décodage d'une image haute résolution à partir d'une image basse résolution**

(57) L'invention concerne une méthode d'héritage d'informations de codage d'une première image à partir d'informations de codage d'une deuxième image, le rapport entre les dimensions respectives des première et deuxième images étant prédéterminé. La méthode comprend:

- une étape (10) d'étiquetage consistant à affecter une étiquette à chaque bloc d'une première taille de la première image en fonction des informations de partitionnement de la deuxième image ;
- une étape (12) de partitionnement de chaque macrobloc de la première image en blocs d'une deuxième taille en fonction des étiquettes associées à chacun des blocs d'une première taille composant le macrobloc; et
- une étape (13) d'affectation des informations de mode de codage, associées aux blocs de la deuxième image aux blocs d'une deuxième taille de la première image.

FIG. 4

Etiquetage des blocs 8x8 du super-macrobloc $SM_{HR}$ — 10

Harmonisation des étiquettes — 11

Transformation des étiquettes en partitionnement — 12

Affectation des information de codage aux blocs du super-macrobloc SMHR — 13

**Description**

1. <u>Domaine de l'invention</u>

L'invention concerne une méthode et un dispositif de codage hiérarchique avec graduation ou extensibilité spatiale (« spatial scalability » en anglais) permettant de coder une image haute résolution à partir du codage d'une image de résolution inférieure, appelée image basse résolution. Plus particulièrement, elle concerne une méthode d'héritage, dite méthode d'héritage inter couches, permettant de déduire les informations de codage nécessaires pour coder l'image haute résolution à partir des informations de codage utilisées pour coder l'image basse résolution.

2. <u>Etat de l'art</u>

Les dispositifs de codage hiérarchique avec graduation spatiale sont du domaine connu. La graduation représente la capacité d'échelonner l'information pour la rendre décodable à plusieurs niveaux de résolution et/ou de qualité. Plus précisément, un flux de données généré par ce type de dispositif de codage est divisé en plusieurs couches, notamment une couche de base et une ou plusieurs couches d'amélioration. Ces dispositifs permettent notamment d'adapter un unique flux de données à des conditions de transport variables (bande passante, taux d'erreurs,...) ainsi qu'aux attentes des clients et aux capacités variées de leurs récepteurs (caractéristiques du CPU, caractéristiques du dispositif de visualisation, ...). Dans le cas particulier de la graduation spatiale, la partie du flux de données correspondant aux images basse résolution de la séquence pourra être décodée indépendamment de la partie du flux de données correspondant aux images haute résolution. En revanche, la partie du flux de données correspondant aux images haute résolution de la séquence ne pourra être décodée qu'à partir de la partie du flux de données correspondant aux images basse résolution.

Le codage hiérarchique avec graduation spatiale permet de coder une première partie de données appelée couche de base, relative aux images basse résolution, et à partir de cette couche de base une deuxième partie de données appelée couche d'amélioration, relative aux images haute résolution. Les informations de codage relatives à la couche d'amélioration sont généralement héritées ou déduites des informations de codage relatives à la couche de base. Parmi ces informations de codage figurent notamment : un motif de partitionnement associé à des blocs de pixels de l'image haute résolution, appelés macroblocs, (pour découper le macrobloc en un ou plusieurs blocs), des modes de codage associés à chacun des blocs, éventuellement des vecteurs de mouvement associés à certains blocs et un ou plusieurs indices d'images de référence associés à certains blocs permettant de référencer l'image utilisée pour prédire ledit bloc. Par une image de référence, on entend une image de la séquence permettant de prédire une autre image de la séquence. Les informations de codage relatives à la couche d'amélioration ne sont donc pas explicitement codées dans le flux de données puisqu'elles peuvent être déduites des informations de codage des images basse résolution. La méthode permettant de déduire ces informations est appelée méthode d'héritage inter couches. Les solutions connues de codage hiérarchique qui mettent en oeuvre une méthode d'héritage inter-couche se limitent au cas où le format haute résolution est lié au format basse résolution par une transformation dyadique. Dans ce cas, les informations de codage nécessaires pour coder l'image haute résolution sont déduites ou héritées directement des informations de codage utilisées pour coder l'image basse résolution. En effet, dans le cas particulier des transformations dyadiques, l'héritage est direct car un macrobloc de l'image haute résolution se superpose parfaitement à un macrobloc de l'image basse résolution sur-échantillonnée par un facteur 2. Dans le cas de transformations non dyadiques, la méthode d'héritage est plus complexe car les macroblocs des images basse résolution sur-échantillonnée et haute résolution ne se superposent pas parfaitement.

3. <u>Résumé de l'invention</u>

L'invention a pour but de pallier à au moins un de ces inconvénients de l'art antérieur. Plus particulièrement, l'invention concerne une méthode d'héritage inter couches d'informations de codage d'une image haute résolution à partir des d'informations de codage d'une image basse résolution pour un cas de transformation non dyadique.

L'invention concerne un méthode d'héritage d'informations de codage pour une première image à partir d'informations de codage d'une deuxième image, chaque image étant constituée de macroblocs eux mêmes constitués de blocs de pixels, les informations de codage associées aux blocs de la deuxième image comprenant au moins des informations de partitionnement et des informations de mode de codage, la taille de chaque image étant définie par une première dimension selon une première direction spatiale et une deuxième dimension selon une deuxième direction spatiale, le rapport entre les premières dimensions des première et deuxième images et le rapport entre les deuxièmes dimensions des première et deuxième images étant prédéterminés. La méthode comprend:

- une étape d'étiquetage consistant à affecter une étiquette à chaque bloc d'une première taille de la première image en fonction des informations de partitionnement de la deuxième image ;

- une étape de partitionnement de chaque macrobloc de la première image en blocs d'une deuxième taille en fonction des étiquettes associées à chacun des blocs d'une première taille composant le macrobloc, ladeuxième taille pouvant être égale à la première taille ; et
- une étape d'affectation des informations de mode de codage, associées aux blocs de la deuxième image aux blocs d'une deuxième taille de la première image.

Avantageusement, l'étape d'affectation consiste également à affecter aux blocs d'une deuxième taille de la première image des informations de mouvement et des informations relatives aux images de référence associées aux blocs de la deuxième image.

Préférentiellement, le rapport entre les premières dimensions des première et deuxième images et le rapport entre les deuxièmes dimensions des première et deuxième images sont égaux à 1,5.

Avantageusement, l'étape d'étiquetage est suivie d'une étape d'harmonisation des étiquettes visant à supprimer à l'intérieur de certains macroblocs de la première image, les étiquettes incompatibles entre elles.

Selon un mode de réalisation particulier, l'étape d'harmonisation consiste à affecter à chacun des blocs de première taille d'un macrobloc l'étiquette associée au bloc première taille localisé en haut et à gauche dans le macrobloc.

Préférentiellement, l'étape d'harmonisation consiste, pour un super-macrobloc constitué de neuf macroblocs répartis en trois lignes de trois macroblocs, à harmoniser les étiquettes à l'intérieur des macroblocs, dits macroblocs H, situés à gauche et à droite du macrobloc localisé au centre du super-macrobloc par une première méthode d'harmonisation et à harmoniser les étiquettes à l'intérieur des macroblocs, dits macroblocs V, situés au dessus et en dessous du macrobloc localisé au centre du super-macrobloc par une deuxième méthode d'harmonisation.

Un macrobloc H est constitué de quatre blocs répartis en deux lignes de deux blocs, à savoir un bloc situé en haut et à gauche, dit bloc $B_1$, un bloc situé en haut et à droite, dit bloc $B_2$, un bloc situé en bas et à gauche, dit bloc $B_3$, un bloc situé en bas et à droite, dit bloc $B_4$. Avantageusement, la première méthode d'harmonisation consiste à comparer les étiquettes associées aux blocs $B_1$ et $B_3$ et si elles sont différentes :

- à affecter une première étiquette à $B_1$ et $B_2$ si l'étiquette associée à $B_1$ est égale à une deuxième étiquette prédéterminée; et
- à affecter la première étiquette à $B_3$ et $B_4$ sinon.

Un macrobloc V est constitué de quatre blocs répartis en deux lignes de deux blocs, à savoir un bloc situé en haut et à gauche, dit bloc $B_5$, un bloc situé en haut et à droite, dit bloc $B_6$, un bloc situé en bas et à gauche, dit bloc $B_7$, un bloc situé en bas et à droite, dit bloc $B_8$. Avantageusement, la deuxième méthode d'harmonisation consiste à comparer les étiquettes associées aux blocs $B_5$ et $B_6$ et si elles sont différentes :

- à affecter une troisième étiquette à $B_5$ et $B_7$ si l'étiquette associée à $B_5$ est égale à une quatrième étiquette prédéterminée; et
- à affecter la troisième étiquette à $B_6$ et $B_8$ sinon.

Préférentiellement, les blocs de première taille ont une taille égale à 8 par 8 pixels, les macroblocs ont une taille égale à 16 par 16 pixels, et les blocs de deuxième taille ont une taille comprise dans l'ensemble suivant : 4 par 4 pixels, 4 par 8 pixels, 8 par 4 pixels, 8 par 8 pixels, 8 par 16 pixels, 16 par 8 pixels, 16 par 16 pixels. L'invention concerne également, un dispositif de codage d'une première image à partir d'informations de codage d'une deuxième image, chaque image étant constituée de macroblocs eux mêmes constitués de blocs de pixels, les informations de codage associées aux blocs de la deuxième image comprenant au moins des informations de partitionnement et des informations de mode de codage, la taille de chaque image étant définie par une première dimension selon une première direction spatiale et une deuxième dimension selon une deuxième direction spatiale, le rapport entre les premières dimensions des première et deuxième images et le rapport entre les deuxièmes dimensions des première et deuxième images étant prédéterminés. Le dispositif comprend:

- des moyens pour coder la deuxième image et les informations de codage associées aux blocs de la deuxième image;
- des moyens d'héritage pour affecter les informations de codage associées aux blocs de la deuxième image aux blocs de la première image ; et
- des moyens pour coder la première image en utilisant les informations de codage affectées aux blocs de la première image par les moyens d'héritage;

Ce dispositif met en oeuvre la méthode d'héritage d'informations de codage décrite ci-dessus.
L'invention concerne en outre un dispositif de décodage d'images codées par le dispositif de codage décrit ci-dessus, les images codées se présentant sous la forme d'un flux de données. Ce dispositif comprend:

- des moyens pour décoder une première partie des données, de manière à générer une première image et des premières informations de codage utilisées pour coder la première image;
- des moyens d'héritage pour déduire des deuxièmes informations de codage à partir des premières informations de codage ; et
- des moyens pour décoder une deuxième partie des données en utilisant les deuxièmes informations de codage.

4. Listes des figures

L'invention sera mieux comprise et illustrée au moyen d'exemples de modes de réalisation et de mise en oeuvre avantageux, nullement limitatifs, en référence aux figures annexées sur lesquelles :

- la figure 1 illustre les motifs de partitionnement d'un macrobloc selon la norme de codage MPEG-4 AVC;
- la figure 2 représente les 9 macroblocs d'une image haute résolution correspondant aux 4 macroblocs d'une image basse résolution et aux 4 mêmes macroblocs sur-échantillonnés par un rapport 1,5;
- la figure 3 illustre la correspondance qui existe entre les blocs 8x8 du super-macrobloc de l'image haute résolution et les macroblocs de l'image basse résolution;
- la figure 4 illustre une méthode d'héritage inter-couche selon l'invention;
- la figure 5 représente représente un super-macrobloc de l'image haute résolution avec les différents types de blocs 8x8 qui le composent ;
- la figure 6 représente un macrobloc 16x16 typé H et un macrobloc 16x16 typé V de l'image haute résolution chacun des macroblocs étant découpé en 4 blocs 8x8 ;
- la figure 7 illustre un dispositif de codage mettant en oeuvre la méthode d'héritage inter-couche selon l'invention;
- la figure 8 illustre un dispositif de décodage mettant en oeuvre la méthode d'héritage inter-couche selon l'invention;

5. Description détaillée de l'invention

La méthode selon l'invention propose une méthode pour déduire des informations de codage d'une image haute résolution à partir des informations de codage d'une image basse résolution, dite méthode d'héritage inter couches, dans le cas particulier d'un rapport R, appelé également rapport inter-couche, entre les dimensions de l'image haute résolution et celles de l'image basse résolution égal à 1,5 correspondant à une transformation non dyadique. Les informations de codage de l'image basse résolution sont déterminées au préalable notamment par une méthode de décision de mode de codage. La méthode selon l'invention peut être étendue à des rapports R égaux à un multiple 1,5 (par exemple 3, 4,5, ...), en appliquant la méthode selon l'invention sur une image virtuelle que l'on crée à partir d'une image basse résolution de telle sorte que le rapport entre les dimensions de l'image haute résolution et celles de l'image virtuelle soit égal à 1,5. Cette méthode d'héritage permet notamment de coder une image haute résolution à partir d'une image basse résolution sans avoir à coder effectivement toutes les informations de codage de cette image haute résolution. Il en résulte donc un gain en coût de codage. La méthode d'héritage selon l'invention est utilisée par un dispositif de codage et un dispositif de décodage. Les informations de codage (par exemple partitionnement, indices d'image de référence, vecteurs de mouvement ...) des images haute résolution ne sont pas codées par le dispositif de codage. En effet, ces informations sont également déduites dans le dispositif de décodage à partir des informations de codage des images basse résolution. Ainsi, le dispositif de codage permet de générer un flux de données moins coûteux en nombre de bits puisque les informations de codage relatives aux images haute résolution ne sont pas codées.

Le mode de réalisation préféré décrit une application de l'invention dans le cadre d'un type de codage conforme à la norme de codage MPEG4 AVC définie dans le document ISO/IEC 14496-10 (intitulé en anglais « Information technology -- Coding of audio-visual objects -- Part 10: Advanced Video Coding »).

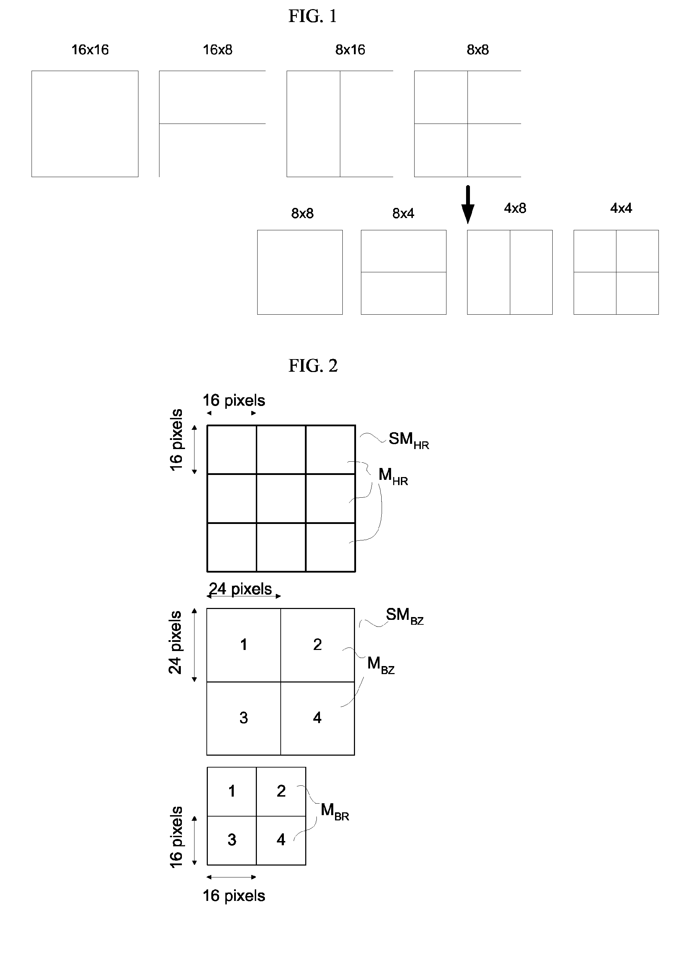

Les informations de codage dont héritent les macroblocs d'une image haute résolution sont un partitionnement de ces macroblocs en blocs, des modes de codage (par exemple des modes de codage prédictifs utilisant des images de référence pour prédire une image courante, parmi lesquels le mode inter, le mode bidirectionnel, et le mode de codage intra qui n'utilise pas d'image de référence) associés à chacun des blocs, et éventuellement des vecteurs de mouvement et des indices d'images de référence. La figure 1 représente le partitionnement d'un macrobloc en blocs selon la norme de codage MPEG4 AVC. Sur une première ligne sont représentés des macroblocs ainsi que les différentes partitions de ces macroblocs en blocs tels que proposés par la norme MPEG4 AVC. Il s'agit de blocs de dimensions 16 par 8 pixels (dit bloc 16x8), 8 par 16 pixels (dit bloc 8x16) et 8 par 8 pixels (dit bloc 8x8). Sur une deuxième ligne de la figure 1 sont représentés des blocs de dimensions 8x8 pixels et les différentes sous-partitions de ces blocs en blocs plus petits. Selon la norme MPEG 4 AVC, dans le cas où le macrobloc est divisé en 4 blocs 8x8, une nouvelle décomposition de ces blocs est possible en blocs de dimensions 8 par 4 pixels (dit bloc 8x4), 4 par 8 pixels (dit bloc 4x8) et 4 par 4 pixels (dit bloc 4x4). A chaque bloc d'un macrobloc est ainsi attribué un mode de codage et, le cas échéant, un ou deux vecteurs de mouvement et un ou deux indices d'image de référence permettant de définir le bloc de prédiction utilisé pour prédire le bloc. L'indice d'image de référence associé à un bloc B est l'indice de l'image de référence dans laquelle est localisé le bloc de prédiction. Dans le cadre de la norme MPEG4 AVC, deux listes d'indices de référence sont utilisées (une liste $L_0$ et une liste $L_1$).

La figure 2 illustre un ensemble de 4 macroblocs, notés $M_{BR}$, d'une image basse résolution. Sur cette figure, les quatre macroblocs $M_{BR}$ après sur-échantillonnage par un rapport inter-couche égal à 1,5 sont notés $M_{BZ}$. A titre d'exemple, le sur-échantillonnage peut être effectué à partir d'un filtre linéaire séparable dont les coefficients c(x) correspondent à un sinus cardinal pondéré par une fenêtre d'atténuation. Le filtre suivant est par exemple utilisé :

$$c(x) = \begin{cases} \dfrac{\sin(\pi x)}{\pi x} \dfrac{\sin(\pi \frac{x}{2})}{\pi \frac{x}{2}} & , |x| < 2 \\ \\ 0 & , |x| \geq 2 \end{cases}$$

où x est la partie fractionnaire de la position du pixel à interpoler dans l'image source.

Le groupe des quatre macroblocs $M_{BZ}$ est appelé super-macrobloc et est référencé $SM_{BZ}$. A ces quatre macroblocs sont associées les informations de codage des macroblocs $M_{BR}$ correspondants. A ces quatre macroblocs de l'image basse résolution sur-échantillonnée correspondent exactement neuf macroblocs de l'image haute résolution notés $M_{HR}$. La méthode selon l'invention consiste donc à déterminer pour chaque macrobloc $M_{HR}$ une éventuelle partition en blocs de taille inférieure (par exemple en blocs 8x8, 8x16, 16x8, 8x4, 4x8, ou 4x4) et éventuellement pour chaque bloc de l'image haute résolution des paramètres de codage associés (i.e. le mode de codage, les vecteurs de mouvements et les indices d'images de référence). La méthode d'héritage est décrite pour le groupe de neuf macroblocs $M_{HR}$, appelé super-macrobloc $SM_{HR}$, de l'image haute résolution et peut être étendue de manière directe à la totalité de l'image haute résolution. Les informations de codage d'un super-macrobloc $SM_{HR}$ sont déduites des informations de codage d'un super-macrobloc $SM_{BZ}$.

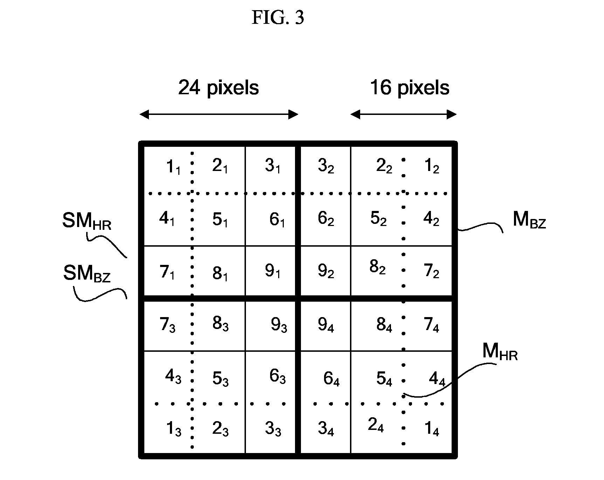

La figure 3 représente la superposition d'un super-macrobloc $SM_{HR}$ et d'un super-macrobloc $SM_{BZ}$ et leur découpage en 36 blocs 8x8. Les traits épais continus délimitent les quatre macroblocs $M_{BZ}$, les traits fins continus délimitent les neuf macroblocs $M_{HR}$ et les traits en pointillés et les traits fins continus délimitent les 36 blocs 8x8.

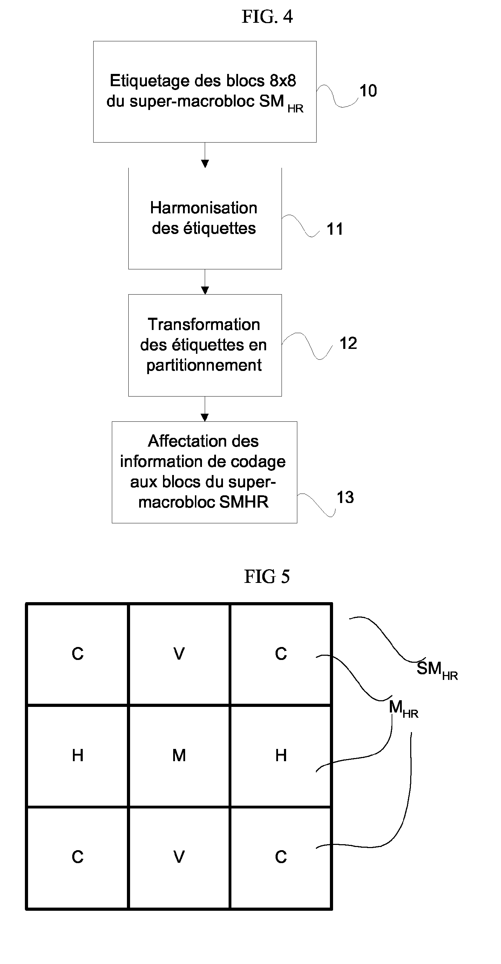

Comme illustré par la figure 4, à chaque bloc 8x8 du super-macrobloc $SM_{HR}$ correspond exactement un bloc 8x8 du super-macrobloc $SM_{BZ}$. Les étapes de la méthode de codage selon l'invention sont référencées 10 à 13 sur la figure 4. Sur cette figure, les modules représentés sont des unités fonctionnelles, qui peuvent ou non correspondre à des unités physiquement distinguables. Par exemple, ces modules ou certains d'entre eux peuvent être regroupés dans un unique composant, ou constituer des fonctionnalités d'un même logiciel. *A contrario*, certains modules peuvent éventuellement être composés d'entités physiques séparées. La première étape 10 de la méthode consiste à affecter une étiquette (appelée également label) à chaque bloc 8x8 du super-macrobloc $SM_{BZ}$ et au bloc 8x8 correspondant dans le super-macrobloc $SM_{HR}$ en fonction d'informations sur le partitionnement des macroblocs $M_{BZ}$ relatifs à l'image basse résolution. L'étape d'étiquetage est basée sur la découpe du macrobloc $M_{BZ}$ référencé X (X étant égal à 1, 2, 3 ou 4) en 9 blocs 8x8 numérotés de $1_X$ à $9_X$ sur la figure 4. La numérotation des blocs à l'intérieur d'un macrobloc $M_{BZ}$ dépend de la position de ce macrobloc à l'intérieur du super-macrobloc $SM_{BZ}$. Comme illustré par la figure 4, quatre types de numérotations différentes sont utilisés. L'étiquette associée à un bloc 8x8 est déduite du tableau 1 défini ci-dessous en fonction de la position de ce bloc dans le macrobloc $M_{BZ}$ et du partitionnement de ce macrobloc:

| Étiquettes | | Numéros de blocs 8x8 dans le macrobloc $M_{BZ}$ référencé X | | | | | | | | |
|---|---|---|---|---|---|---|---|---|---|---|
| | | $1_X$ | $2_X$ | $3_X$ | $4_X$ | $5_X$ | $6_X$ | $7_X$ | $8_X$ | $9_X$ |
| Partitionnement de $M_{BZ}$ | 16x16 | $E_{16x16}$ | $E_{16x16}$ | $E_{8x16}$ | $E_{16x16}$ | $E_{16x16}$ | $E_{8x16}$ | $E_{16x8}$ | $E_{16x8}$ | $E_{8x8}$ |
| | 8x16 | $E_{8x8}$ | $E_{4x8}$ | $E_{8x16}$ | $E_{8x8}$ | $E_{4x8}$ | $E_{8x16}$ | $E_{8x8}$ | $E_{4x8}$ | $E_{8x8}$ |
| | 16x8 | $E_{8x8}$ | $E_{8x8}$ | $E_{8x8}$ | $E_{8x4}$ | $E_{8x4}$ | $E_{8x4}$ | $E_{16x8}$ | $E_{16x8}$ | $E_{8x8}$ |
| | 8x8 | $E_{8x8}$ | $E_{4x8}$ | $E_{8x8}$ | $E_{8x4}$ | $E_{4x4}$ | $E_{8x4}$ | $E_{8x8}$ | $E_{4x8}$ | $E_{8x8}$ |

## tableau 1

Ainsi, selon le partitionnement du macrobloc $M_{BZ}$ référencé X et selon sa position, on affecte une étiquette à chaque bloc 8x8 numéroté de $1_x$ à $9_x$ à l'intérieur du macrobloc $M_{BZ}$ et donc à chaque bloc 8x8 du macrobloc correspondant $M_{HR}$. Ainsi, si le partitionnement 16x16 est associé au macrobloc $M_{BZ}$, référencé 1 sur la figure 2, alors au bloc numéroté $2_1$ de ce macrobloc est associée l'étiquette $E_{16x16}$ et au bloc numéroté $7_1$ est associée l'étiquette $E_{16x8}$. De même, si le partitionnement 16x8 est associé au macrobloc $M_{BZ}$, référencé 4 sur la figure 2, alors au bloc numéroté $4_4$ de ce macrobloc est associée l'étiquette $E_{8x4}$ et au bloc numéroté $9_4$ est associée l'étiquette $E_{8x8}$. Dans le cas où certains des blocs 8x8 de l'image basse résolution sont sous-partitionnés en blocs de taille 4x4, 8x4 ou 4x8, une image virtuelle de la même taille que l'image basse résolution est créée dans laquelle les partitionnements 4x4, 8x4 et 4x8 sont supprimés et remplacés par un partitionnement en blocs 8x8. A chaque bloc 8x8, on peut associer, indépendamment, pour chaque liste d'indices d'images de référence, la moyenne des vecteurs de mouvements des blocs qui le composent ou encore le premier vecteur dans le bloc 8x8, i.e. dans le cas d'un sous-partitionnement 4x4, le vecteur associé au bloc 4x4 localisé en haut et à gauche dans le bloc 8x8.

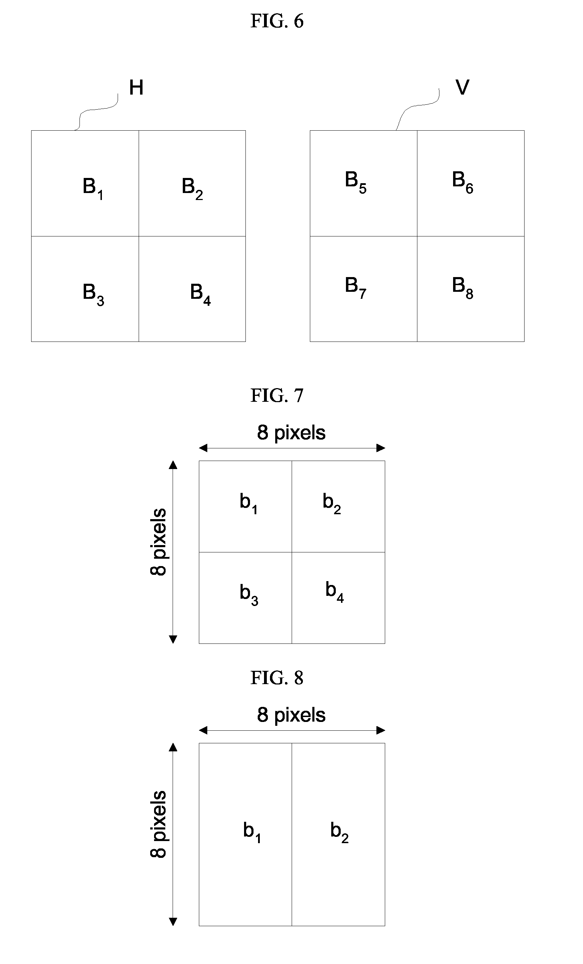

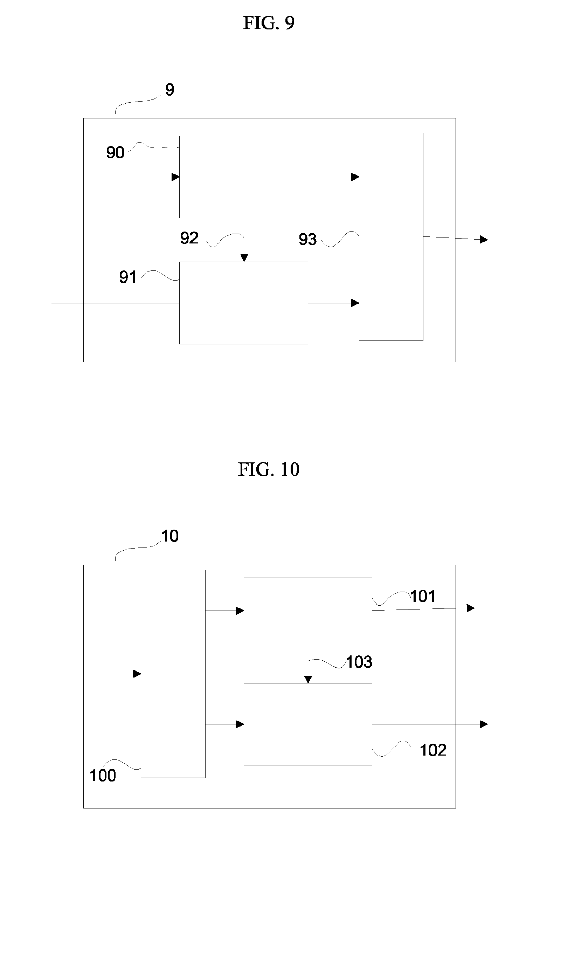

Avantageusement, la méthode selon l'invention comporte une étape 11 qui consiste à harmoniser au sein d'un macrobloc $M_{HR}$ de l'image haute résolution les étiquettes des blocs 8x8 qui le composent, déterminées à l'étape 10. L'objectif de cette étape est d'éliminer des étiquettes incompatibles entre elles à l'intérieur d'un même macrobloc (par exemple, des blocs 8x8 affectés de l'étiquette $E_{16x8}$ et des blocs 8x8 affectés de l'étiquette $E_{8x16}$). Selon leur position à l'intérieur du super-macrobloc $SM_{HR}$, les macroblocs sont ou ne sont pas harmonisés. Quatre types de macroblocs à l'intérieur d'un super-macrobloc $SM_{HR}$ sont ainsi identifiés sur la figure 5. Les macroblocs situés dans les coins du super-macrobloc $SM_{HR}$ sont référencés C, le macrobloc central est référencé M, les macroblocs situés sur un axe vertical au dessus et au dessous de M sont référencés V, et les macroblocs situés sur un axe horizontal à droite et à gauche de M sont référencés H. Seuls les macroblocs référencés H ou V sont concernés par l'étape d'harmonisation. En effet, l'étape d'étiquetage 10 utilisant le tableau 1 assure que les étiquettes affectées aux blocs 8x8 qui composent les autres macroblocs référencés M et C sont compatibles entre elles. Chaque macrobloc typé H est subdivisé en 4 blocs 8x8 référencés $B_1$, $B_2$, $B_3$, et $B_4$ sur la figure 6 et chaque macrobloc typé V est subdivisé en 4 blocs 8x8 référencés $B_5$, $B_6$, $B_7$, et $B_8$ sur la figure 6. L'étape d'harmonisation consiste à comparer les étiquettes associées à chacun de ces blocs et à modifier une étiquette si cela est nécessaire. Pour les macroblocs typés H, l'étape d'harmonisation consiste à comparer l'étiquette associée à $B_1$ avec celle associée à $B_3$.
Si ces deux étiquettes sont différentes :

- si l'étiquette de $B_1$ est égale à $E_{16x8}$, l'étiquette $E_{8x8}$ est alors affectée à $B_1$ et à $B_2$ ;
- sinon l'étiquette $E_{8x8}$ est affectée à $B_3$ et à $B_4$.

Pour les macroblocs typés V, l'étape d'harmonisation consiste à comparer l'étiquette associée à $B_5$ avec celle associée à $B_6$ .
Si ces deux étiquettes sont différentes :

- si l'étiquette de $B_5$ est égale à $E_{8x16}$, l'étiquette $E_{8x8}$ est alors affectée à $B_5$ et à $B_7$ ;
- sinon l'étiquette $E_{8x8}$ est affectée à $B_6$ et à $B_8$.

Cette étape peut consister plus simplement à associer au macrobloc $M_{HR}$ une des étiquettes d'un des blocs 8x8 qui le composent en cas d'incompatibilité, par exemple, l'étiquette associée au bloc 8x8 localisé en haut et à gauche du macrobloc, i.e. au bloc $B_1$ ou $B_5$, est affectée au macrobloc. D'autres critères peuvent être envisagés.

L'étape suivante 12 selon l'invention consiste à transformer les étiquettes associées aux blocs 8x8 du super-macrobloc $SM_{HR}$ en un partionnement particulier de chaque macrobloc $M_{HR}$ de ce super-macrobloc. La transformation des étiquettes en partitionnement est directe puisque toutes les étiquettes à l'intérieur d'un macrobloc donné ont été harmonisées à l'étape précédente. Ainsi, si les quatre étiquettes associées aux quatre blocs 8x8 d'un macrobloc $M_{HR}$ sont les mêmes et sont égales à $E_{8x8}$, alors le macrobloc est effectivement partitionné en quatre blocs 8x8. De même, si deux étiquettes $E_{8x16}$ sont associées à deux blocs 8x8 d'un macrobloc $M_{HR}$, alors celui-ci est effectivement partitionné en deux blocs 8x16.

L'étape suivante 13 selon l'invention est l'étape d'héritage inter couches. Cette étape consiste à affecter aux macroblocs $M_{HR}$, les informations de codage (par exemple les vecteurs de mouvement, les indices des images de référence et les modes de codage) relatives aux macroblocs $M_{BZ}$. L'étape d'héritage peut consister en un héritage direct des informations de l'image basse résolution. En effet, l'héritage direct consiste pour chaque bloc de chaque macrobloc $M_{HR}$ à récupérer les informations de codage du macrobloc $M_{BZ}$ de l'image basse résolution sur-échantillonnée qui lui correspond. Les trois étapes précédentes garantissent qu'à un bloc d'un macrobloc $M_{HR}$ correspond un unique bloc d'un macrobloc $M_{BZ}$, dont il hérite. Si la méthode d'héritage direct est utilisée telle quelle et que le mode de codage d'un macro bloc de l'image basse résolution est le mode de codage intra alors des blocs 4x4 d'un macro bloc $M_{HR}$ peuvent hériter du mode intra. Cette configuration est interdite par la norme MPEG-4 AVC qui ne permet d'affecter un mode de codage intra qu'à un macrobloc entier. Un autre mode de réalisation consiste à accepter d'affecter un mode de codage intra à un bloc 8x8, en ne garantissant donc pas la conformité à la norme MPEG4 AVC. Dans ce cas, si un mode intra est affecté à un bloc 4x4, 8x4 ou 4x8 d'un bloc 8x8, alors le mode intra est affecté à ce bloc 8x8 et non au macrobloc auquel appartient ce bloc 8x8. Ce mode de réalisation s'il ne permet pas de générer des données compatibles avec MPEG4 AVC est un compromis satisfaisant entre complexité et efficacité de codage. De même, la norme de codage MPEG-4 AVC n'autorise pas les configurations dans lesquelles des blocs 4x4, 8x4 ou 4x8 d'un même bloc 8x8 ont des indices d'image de référence différents pour une liste d'indices de référence donnée. En utilisant cette méthode d'héritage direct, on peut donc générer des données non conformes à la norme MPEG-4 AVC. On peut générer par exemple une partition 8x4 pour laquelle chaque bloc 8x4 de la partition utilise, par exemple pour la liste $L_0$, un indice d'image de référence différent.

Un autre mode de réalisation consiste à générer des données compatibles avec la norme MPEG-4 AVC en interdisant ces différentes configurations. Pour cela, selon l'invention, si le mode de codage intra est affecté à un seul bloc d'un macrobloc $M_{HR}$, le mode de codage intra est affecté au macrobloc entier. Afin de générer des données conformes à cette norme, les informations de modes de codage et les informations de mouvement (vecteurs de mouvement et indices des images de référence) peuvent être fusionnées au sein d'un bloc 8x8. Cette fusion des informations doit être effectuée indépendamment pour chaque liste $L_0$ et $L_1$ d'indices d'images de référence. Une première solution consiste, pour un bloc 8x8 composé de plusieurs blocs de plus petite taille ayant des indices de référence différents, à remplacer leurs indices respectifs par l'indice minimal entre les indices associés à chacun des blocs composant le bloc 8x8. Une deuxième solution consiste à associer à chacun des blocs composant le bloc 8x8, l'indice de l'image de référence le plus communément affecté. Dans le cas particulier décrit par la figure 7 un bloc 8x8 est partitionné en 4 blocs 4x4 référencés $b_1$, $b_2$, $b_3$, et $b_4$. Supposons par exemple, qu'au bloc $b_1$ soit associé un indice d'image de référence $id_1$ dans la liste d'indices $L_0$, qu'aux blocs $b_2$ et $b_4$ soit associé un indice d'image de référence $id_2$ dans la liste d'indices $L_0$ et qu'au bloc $b_3$ soit associé un indice d'image de référence $id_3$ dans la liste d'indices $L_0$, avec $id_1 < id_2 < id_3$. Dans cet exemple, si la première solution est utilisée alors l'indice $id_1$ est sélectionné pour être affecté aux blocs $b_2$, $b_3$, et $b_4$ en remplacement de leurs indices respectifs. Si la seconde solution est utilisée alors l'indice $id_2$ est sélectionné pour être affecté aux blocs $b_1$ et $b_3$ en remplacement de leurs indices respectifs. Dans l'autre exemple illustré par la figure 8, un bloc 8x8 est partitionné en deux blocs 4x8 référencés $b_1$ et $b_2$ auxquels sont associés des indices d'image de référence différents respectivement $id_1$ e t $id_2$, avec $id_2 < id_1$ dans une même liste d'indices $L_0$. Selon la première solution, l'indice $id_2$ est retenu et est affecté au bloc $b_1$ en remplacement de son indice $id_1$. La solution proposée étant appliquée indépendamment pour chaque liste, supposons maintenant, qu'au bloc $b_1$ soit associé un indice $id_1$ dans la liste $L_0$ et aucun indice dans la deuxième liste $L_1$, et qu'au bloc $b_2$ soit associé un indice $id_2$ dans la liste $L_1$ et aucun indice dans la première liste $L_0$. Dans ce cas, on affecte l'indice $id_1$ au bloc $b_2$ dans la liste $L_0$ et l'indice $id_2$ au bloc $b_1$ dans la liste $L_1$. A ces deux blocs sont donc affectés deux indices d'image de référence, un indice par liste.

Les indices d'image de référence ayant été fusionnés à l'intérieur d'un bloc 8x8, il est nécessaire de fusionner les informations de mouvement, en l'occurrence les vecteurs de mouvement associés à chacun des blocs qui le composent. L'uniformisation des vecteurs de mouvement est également effectuée indépendamment pour chaque liste. Chaque vecteur étant défini par une première et une deuxième coordonnées, une solution consiste alors à affecter pour une liste donnée ,par exemple $L_0$ ou $L_1$, à l'ensemble des blocs composant le bloc 8x8 le vecteur de mouvement dont la première coordonnée est égale à la moyenne des premières coordonnées des vecteurs de mouvement de chacun des blocs composant le bloc 8x8 et ayant pour indice de référence l'indice sélectionné selon l'une des méthodes décrites précédemment et dont la deuxième coordonnée est égale à la moyenne des deuxièmes coordonnées des vecteurs de mouvement de chacun des blocs composant le bloc 8x8 et ayant pour indice d'image de référence l'indice sélectionné selon l'une des méthodes décrites précédemment. Ainsi, dans l'exemple décrit par la figure 7, le vecteur $MV_1$ de coor-

données $(x_1,y_1)$ est associé au bloc b1, le vecteur $MV_2$ de coordonnées $(x_2,y_2)$ est associé au bloc $b_2$, le vecteur $MV_3$ de coordonnées $(x_3,y_3)$ est associé au bloc b3, le vecteur $MV_4$ de coordonnées $(x_4,y_4)$ est associé au bloc $b_4$. Le vecteur MV de coordonnées $(x_1,y_1)$ est affecté à chacun des blocs $b_2$, $b_3$ et $b_4$ en remplacement de leurs vecteurs de mouvement respectifs si l'indice $id_1$ a été retenu précédemment. Le vecteur MV de coordonnées $(0.5(x_2+x_4), 0.5(y_2+y_4))$ est affecté à chacun des quatre blocs $b_1$, $b_2$, $b_3$ et $b_4$ en remplacement de leurs vecteurs de mouvement respectifs si l'indice $id_2$ a été retenu précédemment. Cette fusion des indices d'images de références et des vecteurs de mouvement permet également lors d'une dernière étape de modifier le partitionnement du bloc 8x8 en fusionnant les blocs qui le composent et qui ont des vecteurs de mouvement identiques. En effet, dans le cas décrit figure 7, les quatre blocs $b_1$, $b_2$, $b_3$, et $b_4$ ayant un vecteur de mouvement associé et un indice d'image de référence identique peuvent être fusionnés afin d'affecter un partitionnement 8x8 au bloc 8x8 en remplacement du partitionnement en blocs 4x4.

Cette méthode peut être étendue à des rapports R égaux à un multiple 1,5 (par exemple 3, 4,5, ...), en appliquant la méthode selon l'invention sur une image virtuelle que l'on crée à partir d'une image basse résolution de telle sorte que le rapport entre les dimensions de l'image haute résolution et celles de l'image virtuelle soit égal à 1,5.

Une autre solution pour étendre la méthode à des rapports R égaux à un multiple 1,5 (par exemple 3, 4,5, ...), consiste à étendre le tableau 1 et à appliquer les étapes 10 à 13 en utilisant le tableau étendu. Par exemple, dans le cas d'un rapport égal à 3, aux quatre macroblocs $M_{BZ}$ de l'image basse résolution sur-échantillonnée par un rapport 3 correspondent exactement 36 macroblocs de l'image haute résolution au lieu de 9 comme cela est le cas pour un rapport de 1,5. L'étape d'étiquetage 10 consiste donc à affecter, selon le partitionnement du macrobloc $M_{BZ}$ ré férencé X et selon sa position, une étiquette à chaque bloc 8x8 numéroté de $1_X$ à $36_X$ à l'intérieur du macrobloc $M_{BZ}$ et donc à chaque bloc 8x8 du macrobloc correspondant $M_{HR}$. Les autres étapes 11 à 13 s'appliquent de la même manière que dans le cas d'un rapport 1,5.

L'invention concerne également un dispositif 9 de codage hiérarchique avec graduation spatiale mettant en oeuvre la méthode de d'héritage selon l'invention. Ce dispositif de codage comprend notamment un module 90 permettant de coder la couche de base correspondant aux images basse résolution ainsi qu'un module 91 de codage de la couche d'amélioration correspondant aux images haute résolution source. Le module 91 utilise des informations provenant du module 90 pour coder les données de la couche d'amélioration. A cet effet, le dispositif comprend des moyens d'héritage 92 permettant de déduire les informations de codage des images haute résolution à partir des informations de codage des images basse résolution fournies par le module 90. Le dispositif contient en outre un module de multiplexage 93 qui formate les données issues des deux modules de codage afin de créer un unique flux de données.

L'invention concerne également un dispositif 10 de décodage hiérarchique avec graduation spatiale mettant en oeuvre la méthode d'héritage selon l'invention. Ce dispositif 10 reçoit en entrée un flux de données généré avec le dispositif de codage 9. Ce dispositif de décodage comprend notamment un module 101 permettant de décoder la couche de base correspondant aux images basse résolution ainsi qu'un module 102 de décodage de la couche d'amélioration correspondant aux images haute résolution source. Le module 102 utilise des informations provenant du module 101 pour décoder les données de la couche d'amélioration. A cet effet, le dispositif comprend des moyens 103 permettant de déduire les informations de codage des images haute résolution à partir des informations de codage des images basse résolution fournies par le module 101. Le dispositif contient en outre un module de démultiplexage 100 pour extraire du flux de données les données relatives à la couche de base et à la couche d'amélioration. Les informations de codage des images haute résolution ne sont pas codées dans le flux de données. En effet, elles sont déduites dans le dispositif de décodage à partir des informations de codage des images basse résolution fournies par le module 101 ce qui permet un gain en débit.

Bien entendu, l'invention n'est pas limitée aux exemples de réalisation mentionnés ci-dessus. En particulier, l'homme du métier peut apporter toute variante dans les modes de réalisation exposés et les combiner pour bénéficier de leurs différents avantages.

## Revendications

1. Méthode d'héritage d'informations de codage pour une première image à partir d'informations de codage d'une deuxième image, chaque image étant constituée de macroblocs eux mêmes constitués de blocs de pixels, les informations de codage associées aux blocs de ladite deuxième image comprenant au moins des informations de partitionnement et des informations de mode de codage, la taille de chaque image étant définie par une première dimension selon une première direction spatiale et une deuxième dimension selon une deuxième direction spatiale, le rapport entre les premières dimensions des première et deuxième images et le rapport entre les deuxièmes dimensions des première et deuxième images étant prédéterminés, **caractérisée en ce qu'**elle comprend:

   - une étape (10) d'étiquetage consistant à affecter une étiquette à chaque bloc d'une première taille de la première image en fonction des informations de partitionnement de la deuxième image ;

- une étape (12) de partitionnement de chaque macrobloc de la première image en blocs d'une deuxième taille en fonction des étiquettes associées à chacun desdits blocs d'une première taille composant ledit macrobloc, ladite deuxième taille pouvant être égale à ladite première taille; et
- une étape (13) d'affectation des informations de mode de codage, associées aux blocs de la deuxième image aux blocs d'une deuxième taille de la première image.

**2.** Méthode selon la revendication 1, **caractérisée en ce que** l'étape (13) d'affectation consiste également à affecter aux blocs d'une deuxième taille de la première image des informations de mouvement et des informations relatives aux images de référence associées aux blocs de la deuxième image.

**3.** Méthode selon l'une des revendications 1 ou 2, **caractérisée en ce que** le rapport entre les premières dimensions des première et deuxième images et le rapport entre les deuxièmes dimensions des première et deuxième images sont égaux à 1,5.

**4.** Méthode selon l'une des revendications 1 à 3, **caractérisée en ce que** l'étape d'étiquetage est suivie d'une étape (11) d'harmonisation des étiquettes visant à supprimer à l'intérieur de certains macroblocs de la première image, les étiquettes incompatibles entre elles.

**5.** Méthode selon l'une des revendications 1 à 4, **caractérisée en ce que** l'étape (11) d'harmonisation consiste à affecter à chacun des blocs d'une première taille d'un macrobloc l'étiquette associée audit bloc d'une première taille localisé en haut et à gauche dans ledit macrobloc.

**6.** Méthode selon l'une des revendications 1 à 4, **caractérisée en ce que** l'étape (11) d'harmonisation consiste, pour un super-macrobloc constitué de neuf macroblocs répartis en trois lignes de trois macroblocs, à harmoniser les étiquettes à l'intérieur des macroblocs, dits macroblocs H, situés à gauche et à droite du macrobloc localisé au centre dudit super-macrobloc par une première méthode d'harmonisation et à harmoniser les étiquettes à l'intérieur des macroblocs, dits macroblocs V, situés au dessus et en dessous du macrobloc localisé au centre dudit super-macrobloc par une deuxième méthode d'harmonisation.

**7.** Méthode selon la revendication 6, **caractérisée en ce qu'**un macrobloc H est constitué de quatre blocs répartis en deux lignes de deux blocs, à savoir un bloc situé en haut et à gauche, dit bloc $B_1$, un bloc situé en haut et à droite, dit bloc $B_2$, un bloc situé en bas et à gauche, dit bloc $B_3$, un bloc situé en bas et à droite, dit bloc $B_4$, et **en ce que** ladite première méthode d'harmonisation consiste à comparer les étiquettes associées aux blocs $B_1$ et $B_3$ et si elles sont différentes :

- à affecter une première étiquette à $B_1$ et $B_2$ si l'étiquette associée à $B_1$ est égale à une deuxième étiquette prédéterminée; et
- à affecter la première étiquette à $B_3$ et $B_4$ sinon.

**8.** Méthode selon l'une des revendications 6 ou 7, **caractérisée en ce qu'**un macrobloc V est constitué de quatre blocs répartis en deux lignes de deux blocs, à savoir un bloc situé en haut et à gauche, dit bloc $B_5$, un bloc situé en haut et à droite, dit bloc $B_6$, un bloc situé en bas et à gauche, dit bloc $B_7$, un bloc situé en bas et à droite, dit bloc $B_8$, et **en ce que** la deuxième méthode d'harmonisation consiste à comparer les étiquettes associées aux blocs $B_5$ et $B_6$ et si elles sont différentes :

- à affecter une troisième étiquette à $B_5$ et $B_7$ si l'étiquette associée à $B_5$ est égale à une quatrième étiquette prédéterminée; et
- à affecter la troisième étiquette à $B_6$ et $B_8$ sinon.

**9.** Méthode selon l'une des revendications 1 à 8, **caractérisée en ce que** les blocs de première taille ont une taille égale à 8 par 8 pixels, les macroblocs ont une taille égale à 16 par 16 pixels, et les blocs de deuxième taille ont une taille comprise dans l'ensemble suivant : 4 par 4 pixels, 4 par 8 pixels, 8 par 4 pixels, 8 par 8 pixels, 8 par 16 pixels, 16 par 8 pixels, 16 par 16 pixels.

**10.** Dispositif de codage (9) d'une première image à partir d'informations de codage d'une deuxième image, chaque image étant constituée de macroblocs eux mêmes constitués de blocs de pixels, les informations de codage associées aux blocs de ladite deuxième image comprenant au moins des informations de partitionnement et des informations de mode de codage, la taille de chaque image étant définie par une première dimension selon une première direction spatiale et une deuxième dimension selon une deuxième direction spatiale, le rapport entre les premières dimensions des première et deuxième images et le rapport entre les deuxièmes dimensions des première et deuxième images étant prédéterminés, **caractérisé en ce qu'**il comprend:

  - des moyens (90) pour coder la deuxième image et les informations de codage associées aux blocs de ladite deuxième image;
  - des moyens d'héritage (92) pour affecter les informations de codage associées aux blocs de ladite deuxième image aux blocs de ladite première image ; et
  - des moyens (91) pour coder ladite première image en utilisant les informations de codage affectées aux blocs de ladite première image par lesdits moyens d'héritage (92);

**11.** Dispositif selon la revendication **caractérisé en ce qu'**il met en oeuvre la méthode d'héritage selon l'une des revendications 1 à 9.

**12.** Dispositif de décodage (10) d'images codées par le dispositif de codage selon l'une des revendications 10 ou 11, les images codées se présentant sous la forme d'un flux de données, **caractérisée en ce qu'**il comprend:

  - des moyens (101) pour décoder une première partie desdites données, de manière à générer une première image et des premières informations de codage utilisées pour coder ladite première image;
  - des moyens d'héritage (103) pour déduire des deuxièmes informations de codage à partir des premières informations de codage ; et
  - des moyens (102) pour décoder une deuxième partie desdites données en utilisant lesdites deuxièmes informations de codage.

## FIG. 1

16x16  16x8  8x16  8x8

8x8  8x4  4x8  4x4

## FIG. 2

16 pixels

16 pixels

SM_{HR}

M_{HR}

24 pixels

24 pixels

| 1 | 2 |
| 3 | 4 |

SM_{BZ}

M_{BZ}

16 pixels

16 pixels

| 1 | 2 |
| 3 | 4 |

M_{BR}

FIG. 3

FIG. 4

Etiquetage des blocs 8x8
du super-macrobloc SM$_{HR}$ ⟋ 10

Harmonisation
des étiquettes ⟋ 11

Transformation
des étiquettes en
partitionnement ⟋ 12

Affectation des
information de codage
aux blocs du super-
macrobloc SMHR ⟋ 13

FIG 5

| C | V | C |
|---|---|---|
| H | M | H |
| C | V | C |

SM$_{HR}$

M$_{HR}$

FIG. 6

H

| | |
|---|---|
| $B_1$ | $B_2$ |
| $B_3$ | $B_4$ |

V

| | |
|---|---|
| $B_5$ | $B_6$ |
| $B_7$ | $B_8$ |

FIG. 7

8 pixels

8 pixels

| | |
|---|---|
| $b_1$ | $b_2$ |
| $b_3$ | $b_4$ |

FIG. 8

8 pixels

8 pixels

| | |
|---|---|
| $b_1$ | $b_2$ |

FIG. 9

9

90

92    93

91

FIG. 10

10

100    101

103

102

**EP 1 694 075 A1**

**Office européen des brevets**

# RAPPORT PARTIEL DE RECHERCHE EUROPEENNE

qui selon la règle 45 de la Convention sur le brevet européen est consideré, aux fins de la procédure ultérieure, comme le rapport de la recherche européenne

Numéro de la demande

EP 05 10 2465

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | REICHEL J; SCHWARZ H; WIEN M: "Joint Scalable Video Model (JSVM) 1.0 Reference Encoding Algorithm Description" JTC1/SC29/WG11 AND ITU-T SG16 Q6, N6899, janvier 2005 (2005-01), pages 1-39, XP002383964 * page 12, alinéa 1.2.3.2 - page 13 * ----- | 1-12 | INV. H04N7/26 |

**DOMAINES TECHNIQUES RECHERCHES (IPC)**

H04N

### RECHERCHE INCOMPLETE

La division de la recherche estime que la présente demande de brevet, ou une ou plusieurs revendications, ne sont pas conformes aux dispositions de la CBE au point qu'une recherche significative sur l'état de la technique ne peut être effectuée, ou seulement partiellement, au regard de ces revendications.

Revendications ayant fait l'objet d'une recherche complète:

Revendications ayant fait l'objet d'une recherche incomplète:

Revendications n'ayant pas fait l'objet d'une recherche:

Raison pour la limitation de la recherche:

voir feuille supplémentaire C

| Lieu de la recherche | Date d'achèvement de la recherche | Examinateur |
|---|---|---|
| Berlin | 14 juin 2006 | Raeymaekers, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C08)

16

**Office européen**

**des brevets**

**RECHERCHE INCOMPLETE**
**FEUILLE SUPPLEMENTAIRE C**

Numéro de la demande

EP 05 10 2465

Raison pour la limitation de la recherche (invention(s) non brevetable(s)):

L'objet des revendications de méthode 1 à 9 peut être considéré comme une méthode pour exécuter des actes mentaux tel quel et est pour cette raison exclu de la brevetabilité sous l'Article 52(2)c EPC.

Les revendications 1 à 9 ne spécifient aucun moyen technique utilisé pour exécuter les étapes des méthodes revendiquées. De plus, aucun effet technique tangible est atteint par les méthodes revendiquées. Les méthodes des revendications 1 à 9 peuvent toutes être exclusivement exécutées mentalement (au moins en théorie). Pour plus d'informations détaillées, il est fait référence à la décision T914/02.

Toutefois, malgré le problème d'Article 52(2)c, une recherche a été faite pour toutes les revendications.